# EUROPÄISCHE PATENTSCHRIFT

(11) **EP 0 344 709 B1**
(45) Veröffentlichungstag und Bekanntmachung des Hinweises auf die Patenterteilung: **12.05.1993**
(21) Anmeldenummer: 89109726.3
(22) Anmeldetag: 30.05.1989
(51) Int. Cl.: B01D 61/00, B01D 71/00

(54) **Querstromfiltermodul**
Cross-flow filtration module
Module de filtration tangentielle

(30) Priorität: 30.05.1988 DD 316157
(43) Veröffentlichungstag der Anmeldung: 06.12.1989
(73) Patentinhaber: Oxyphen GmbH, 01474 Rossendorf (DE)
(72) Erfinder: Lück, Hans Bernhard, Dr.sc., DDR-8053 Dresden (DD); Heinrich, Bernd, Dr., DDR-8351 Dittersbach (DD)
(74) Vertreter: Beetz & Partner Patentanwälte

(56) Entgegenhaltungen:
- EP-A- 0 296 881
- DE-U- 8 705 679
- US-A- 4 278 542

## Beschreibung

Die Erfindung betrifft ein Querstromfiltermodul nach dem Oberbegriff des Anspruchs 1.

Ein derartiges Filtermodul ist aus der US-A-4,278,542 bekannt. Dieses ist jedoch aus schlauchförmig paarweise zusammengeschweißten Filtermembranen hergestellt, die abschnittweise gestapelt mit metallischen Klammern an den Längsseiten zusammengehalten sind und stirnseitig jeweils mit, die Zuflußöffnungen aufspreizenden, Einsätzen versehen sind, die jeweils zusammen mit der angrenzenden Stirnseite des Membranstapels mit einer Kunststoffmasse dichtend in dem Gehäuse vergossen sind. Damit nur die Stirnseiten vom Kunststoff gefaßt sind, wird der Füllvorgang und der ca. 2 Std. dauernde Aushärteprozeß des Kunststoffs in einer Rotations- und Heizvorrichtung ausgeführt, so daß mit dieser Vorrichtung nur eine geringe Produktionsleistung erbracht wird. Weiterhin birgt die längsseitige Fassung des Membranenstapels mit den Klammern die Gefahr der Zerstörung der dünnen Membranen, und der Stapel findet deck- und bodenseitig keine definierte Abstützung an Gehäuse, weshalb keine Hochdruckfiltration möglich ist.

Weiterhin sind für die dynamische Filtration im Bereich der Ultra- und Mikrofiltration verschiedene Trennvorrichtungen bekannt, die in Form von Filterkassetten, Spiralwickelmodulen und Kapillar- oder Rohrmodulen eingesetzt werden.

In DE-A-2 920 253 ist eine Filterkassette beschrieben, bei der die Verteilung der Fluidströme durch im Rand angeordnete Bohrungen an wenigstens zwei gegenüberliegenden Seiten erfolgt. Die komplizierte Strömungsführung und die kleinen Querschnitte der Strömungskanäle führen bei Filterkassetten generell zu einem erheblichen Strömungswiderstand, der sehr unerwünscht ist.

Spiralwickelfilter werden bevorzugt für Trennaufgaben eingesetzt, bei denen nur geringe Filterdurchsätze von etwa 100 l/m² · h auftreten, wie z.B. bei der Umkehrosmose und der Ultrafiltration. Der lange Weg, den das Filtrat in den Filtertaschen solcher Filter zurückzulegen hat, bedingt auch hier einen hohen Strömungswiderstand.

Kapillarmodule, wie sie bevorzugt für Dialyse, Umkehrosmose, Ultra- und Mikrofiltration benutzt werden. weisen einen geringen Strömungswiderstand auf. Sie werden auch für Trennaufgaben im industriellen Bereich mit Erfolg eingesetzt. Die Einsatzmöglichkeiten dieser strömungsgünstigen Modulform sind jedoch durch das begrenzte Angebot an Membranen in Kapillar- oder Rohrform beschränkt. Es stehen wesentlich mehr planare Membränen mit unterschiedlichen Porendurchmessern und aus verschiedenen Membranmaterialien zur Verfügung als Kapillarmembranen.

Der Erfindung liegt die Aufgabe zugrunde, einen Querstromfiltermodul der eingangs bezeichneten Art zu schaffen, der einfacher herstellbar ist und insbesondere für die dynamische Filtration im Bereich der Ultra- und Mikrofiltration in der Biotechnologie, der Lebensmittel- und Getränkeindustrie, der pharmazeutischen Industrie sowie der Umwelttechnologie geeignet ist.

Die Aufgabe wird anspruchsgemäß gelöst. Die abhängigen Ansprüche betreffen vorteilhafte Ausführungsformen.

Der erfindungsgemäße Querstromfiltermodul besteht aus mindestens einem in einem Gehäuse untergebrachten. insbesondere quaderförmigen, Stapelelement von planaren Filtermembranen mit Zwischenlagen aus einem Stützmaterial, die abwechselnd übereinander angeordnete, durch die als Folien ausgebildeten Filtermembranen voneinander getrennte Strömungskanäle für Rohlösung bzw. Retentat und Filtratkanäle bilden. Die Strömungskanäle für Rohlösung bzw. Retentat sind an den Längsseiten des Stapels verschlossen, während die Filtratkanäle an den Längsseiten Öffnungen zum Abfließen des Filtrats aufweisen. Die Strömungskanäle sind an den Stirnseiten des Stapels offen und die Filtratkanäle geschlossen. Der Stapel ist an seinen Enden im Gehäuse dichtend mit einer Kunststoffmasse vergossen. An den Stirnseiten befinden sich Kappen mit den Anschlüssen für Rohlösungen und Retentat. Die Kappen sind dichtend mit den Stirnseiten verbunden und gewährleisten zusammen mit dem dichtenden Verguß der Stapelenden im Gehäuse eine sichere Trennung zwischen Retentat- und Filtratraum. Das Filtrat tritt an den Längsseiten aus dem Stapel aus, wird im Gehäuse gesammelt und kann über ein oder zwei Abflußstutzen entnommen werden.

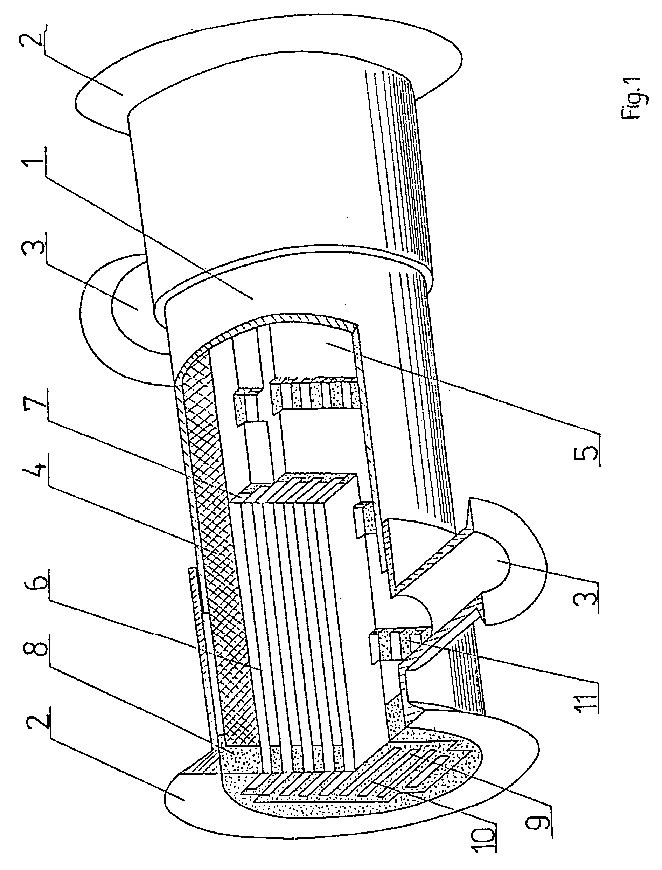

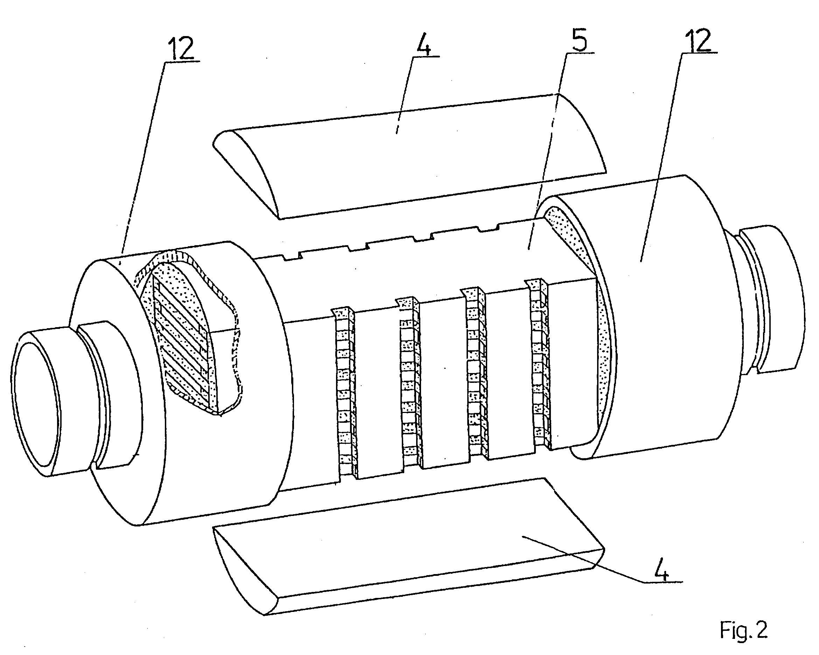

Die Erfindung wird im folgenden anhand von Ausführungsbeispielen unter Bezug auf die Zeichnungen näher erläutert, wobei Fig. 1 einen Teilschnitt eines Querstromfiltermoduls und Fig. 2 einen Teilschnitt einer Querstromfilterpatrone darstellen.

Wie Fig. 1 zeigt, besteht der erfindungsgemäße Querstromfiltermodul aus einem Gehäuse 1, zwei als Anschlußflansche ausgebildeten Anschlüssen 2 für die Lösung und das Retentat, zwei seitlichen Abflußstutzen als Filtratabfluß 3, zwei Stützelementen 4 und einem Stapelelement 5 aus Filtermembranen 6 und den Zwischenlagen 7 aus dem Stützmaterial, das aus Gründen der Übersichtlichkeit in Fig. 1 nicht im einzelnen dargestellt ist. Das Stapelelement 5 ist an den Enden mit dem Gehäuse 1 mit einer Vergußmasse 8 aus Kunststoff dichtend vergossen. Das Stapelelement 5 besteht aus abwechselnd übereinanderliegenden Strömungskanälen 9 für die Rohlösung bzw. das Retentat und Filtratkanälen 10, die durch die Filtermembranen 6 voneinander getrennt sind.

Die Strömungskanäle 9 sind an den Stirnseiten offen, während die Filtratkanäle 10 stirnseitig dichtend verklebt oder verschweißt sind. Das Stapelelement 5 ist an den Längsseiten mit einer Kunststoffmasse dichtend vergossen, so daß die Strömungskanäle 9 gegenüber den Filtratkanälen 10 abgedichtet sind. Der Verguß mit der Kunststoffmasse wird so durchgeführt, daß diese nur in die Strömungskanäle 9 eindringen kann. Die Abflußöffnungen 11 sind als seitliche Nuten nur so tief eingefräst oder -gesägt, daß allein die Filtratkanäle 10 geöffnet sind. Als Stützmaterial der Zwischenlagen 7 für die Strömungskanäle 9 und die Filtratkanäle 10 eignen sich beliebige Gewebearten, Netzgitterstrukturen oder auch profilierte Folien, die der strömenden Flüssigkeit einen möglichst geringen Widerstand entgegensetzen.

Um eine große Filterfläche in dem Gehäuse 1 installieren zu können, wird das Stapelelement 5 aus mehreren Einzelstapeln mit unterschiedlichen Querschnitten aufgebaut, so daß der kreisförmige Querschnitt gut ausgenutzt wird. Im Rahmen der Erfindungskonzeption sind auch andere Zusammenstellungen für das Stapelelement 5 als die in Fig. 1 gezeigten möglich.

Bei der Herstellung des Stapelelements 5 werden die Stapel einzeln an den Längsseiten vergossen und die Nuten als Abflußöffnungen 11 erzeugt. Die einzelnen Stapel werden durch Verklebung an den Enden zu dem Stapelelement 5 zusammengefügt und zusammen mit dem oberen und unteren Stützelement 4 im Gehäuse stirnseitig dichtend mit einer Kunststoffmasse vergossen.

Die Stützelemente 4 bestehen aus Kunststoff und verhindern eine unzulässige Ausdehnung des Stapelelements 5 bei der Druckbeaufschlagung während der Filtration.

Anstelle des kreisförmigen Querschnitts kann das Gehäuse 1 im Bereich zwischen den Anschlüssen 2 auch einen rechteckigen Querschnitt besitzen. In diesem Fall kann auf die Stützelemente 4 verzichtet werden, wenn das Stapelelement 5 direkt durch die Gehäusewand abgestützt wird.

Bei der Filtration mit diesem erfindungsgemäßen Querstromfiltermodul wird die Lösung stirnseitig unter Druck zugeführt und fließt durch die Strömungskanäle 9. Ein Teil der Lösung wird aufgrund des Druckgradienten zwischen den Strömungskanälen 9 und den Filtratkanälen 10 durch die Filtermembranen 6 hindurchgepreßt.

Das Filtrat verläßt die Filtratkanäle 10 durch die als Nuten ausgebildeten Abflußöffnungen 11, die sich in kurzen Abständen an den beiden Längsseiten des Stapelelements 5 befinden, gelangt in das Gehäuse 1 und kann über die als Filtratabfluß 3 dienenden Abflußstutzen entnommen werden.

In Fig. 2 ist ein erfindungsgemäßer Querstromfiltermodul in der Ausführung einer Patrone dargestellt. Die Enden des quaderförmigen Stapelelements 5 sind in Endkappen 12 mit einer Kunststoffmasse dichtend vergossen. Die Patrone wird zusammen mit den beiden Stützelementen 4, die aus einer Kunststoffmasse bestehen, in ein rohrförmiges Filtergehäuse eingeführt, das über entsprechende Anschlüsse für die Zuführung der Lösung und die Abführung des Retentats sowie des Filtrats verfügt. Die Dichtung erfolgt über O-Ringe.

Durch den seitlichen Verguß des Stapelelements mit einer Kunststoffmasse werden Festigkeit und sichere Handhabbarkeit der Patrone gewährleistet.

Der erfindungsgemäße Querstromfiltermodul zeichnet sich durch kurze Filtratwege und einfache Strömungsführung aus, die zu im Vergleich zum Stand der Technik geringerem Druckverlust führen, und erlaubt die Realisierung großer Anschlußquerschnitte.

## Patentansprüche

1. Querstromfiltermodul bestehend aus einem in einem Gehäuse (1) vorgesehenen Stapelelement (5) aus planaren Filtermembranen (6) und Zwischenlagen (7) aus einem Stützmaterial, die abwechselnd übereinander angeordnete, durch Filtermembranen (6) voneinander getrennte Strömungskanäle (9) für Rohlösung bzw. Retentat und Filtratkanäle (10) bilden, wobei die Strömungskanäle (9) für die Rohlösung bzw. das Retentat an den beiden Stirnseiten offen und an den beiden Längsseiten geschlossen sind, die Filtratkanäle (10) nur an den Längsseiten Abflußöffnungen (11) aufweisen und die stirnseitigen Räume des Filtermoduls mit den Anschlüssen (2) zur Zu- bzw. Abführung von Rohlösung bzw. Retentat gegenüber dem die Längsseiten umgebenden Raum mit dem Filtratabfluß (3) abgedichtet sind, indem das Stapelelement (5) im Gehäuse (1) stirnseitig dichtend mit einer Kunststoffmasse (8) vergossen ist,
dadurch gekennzeichnet, daß das Stapelelement (5) an den Längsseiten mit der Kunststoffmasse (8) abdichtend vergossen ist, wobei diese in die Strömungskanäle (9) eingedrungen ist, und daß in diese so vergossenen Längsseiten Nuten als die Abflußöffnungen (11) so tief eingebracht sind, daß allein die Filtratkanäle (10) geöffnet sind.

2. Querstromfiltermodul nach Anspruch 1, dadurch gekennzeichnet, daß es aus mehreren quaderförmigen Stapelnelementen (5) aufgebaut ist.

3. Querstromfiltermodul nach Anspruch 1, dadurch gekennzeichnet, daß das Stapelelement (5) mit Stützelementen (4) deck- und bodenseitig gegenüber dem Gehäuse (1) abgestützt ist.

4. Querstromfiltermodul nach einem der vorstehenden Ansprüche 1 bis 3, dadurch gekennzeichnet, daß das Stapelelement (5) an den Stirnseiten Endkappen (12) aufweist, die mit dem Stapelelement (5) dichtend vergossen sind.

## Claims

1. Transverse flow filter module, comprising a stacking element (5) which is provided in a housing (1) and is made of planar filter membranes (6) and intermediate layers (7) of a support material forming flow channels (9) for crude solution or residue and filtrate channels (10), which are alternately arranged on top of one another and are separated from each other by filter membranes (6), where the flow channels (9) for the crude solution or residue are open at the two end sides and closed at the two longitudinal sides, the filtrate channels (10) have outlet openings (11) only on the longitudinal sides, and the end-side chambers of the filter module having connections (2) for supply and removal of crude solution or residue are sealed off with respect to the chamber surrounding the longitudinal sides and having the filtrate outlet (3), by the stacking element (5) in the housing (1) being cast in sealing manner on its end side by means of a plastics composition (8), characterized in that the stacking element (5) is cast in sealing manner on its longitudinal sides by means of the plastics composition (8), the latter having penetrated into the flow channels (9), and in that in these longitudinal sides which are cast in this manner, grooves are provided as outlet openings (11) of such a depth that only the filtrate channels (10) are open.

2. Transverse flow filter module according to Claim 1, characterized in that it is constructed from a plurality of cuboid stacking elements (5).

3. Transverse flow filter module according to Claim 1, characterized in that the stacking element (5) is supported, with respect to the housing (1), on its top and bottom sides by means of support elements (4).

4. Transverse flow filter module according to one of the preceding Claims 1 to 3, characterized in that the stacking element (5) has on its end sides end caps (12) which are cast to the stacking element (5) in sealing manner.

## Revendications

1. Module de filtration tangentielle composé d'un empilement (5), prévu dans un boîtier (1), de membranes filtrantes (6) planaires et de couches intercalaires (7) en un matériau d'appui, constituant des canaux d'écoulement (9) pour la solution brute ou le rétentat et des canaux de filtrat (10) superposés en alternance et séparés par des membranes filtrantes (6), les canaux d'écoulement (9) pour la solution brute et le rétentat étant ouverts sur les deux faces frontales et fermés sur les deux faces longitudinales, les canaux de filtrat (10) ne présentant des orifices d'évacuation (11) que sur les faces latérales et les compartiments frontaux du module de filtration ainsi que les branchements (2) permettant l'apport et l'évacuation de la solution brute ou du rétentat étant étanchéifiés vis-à-vis du compartiment entourant les faces longitudinales et comportant l'évacuation de filtrat (3), l'empilement (5) étant scellé frontalement de façon étanche dans le boîtier (1) à l'aide d'une masse de matière plastique (8), caractérisé en ce que l'empilement (5) est scellé de façon étanche sur les faces latérales à l'aide de la masse de matière plastique (8), celle-ci ayant pénétré dans les canaux d'écoulement (9) et en ce que des rainures jouant le rôle d'orifices d'évacuation (11) sont ménagées dans les faces latérales ainsi scellées à une profondeur telle que seuls les canaux de filtrat (10) sont ouverts.

2. Module de filtration tangentielle selon la revendication 1, caractérisé en ce qu'il est constitué par plusieurs empilements (5) parallélépipédiques.

3. Module de filtration tangentielle selon la revendication 1, caractérisé en ce que l'empilement (5) est soutenu par les éléments d'appui (4) à sa partie inférieure et supérieure par rapport au boîtier (1).

4. Module de filtration tangentielle selon une des revendications 1 à 3 précédentes, caractérisé en ce que l'empilement (5) présente sur les faces frontales des capuchons terminaux (12) qui sont scellés de façon étanche à l'empilement (5).
